# EUROPEAN PATENT SPECIFICATION

(11) **EP 4 089 306 B1**
(45) Date of publication and mention of the grant of the patent: **18.11.2026**
(21) Application number: 21738705.9
(22) Date of filing: 06.01.2021
(51) Int. Cl.: F16K 31/04, F16K 37/00, F16K 31/50

(54) **ELECTRIC-OPERATED VALVE**
ELEKTRISCH BETÄTIGTES VENTIL
VANNE À COMMANDE ÉLECTRIQUE

(30) Priority: 10.01.2020 JP 2020002705
(43) Date of publication of application: 16.11.2022
(73) Proprietor: Fujikoki Corporation, Tokyo 158-0082 (JP)
(72) Inventor: MATSUBARA Yuta, Tokyo 158-0082 (JP); YOSHIDA Tatsuya, Tokyo 158-0082 (JP); ARAI Yusuke, Tokyo 158-0082 (JP); HOSOYA Takeshi, Tokyo 158-0082 (JP)
(74) Representative: Ter Meer und Partner mbB
(86) International application number: PCT/JP2021/000152
(87) International publication number: WO 2021/141033

(56) References cited:
- EP-A1- 3 502 531
- WO-A1-2018/206404
- JP-A- 2003 042 325
- JP-A- 2007 209 100
- JP-A- 2007 209 100
- JP-A- 2015 046 966
- JP-A- 2016 098 925
- JP-A- 2018 179 133
- JP-A- 2019 124 318
- US-B1- 6 460 567
- US-B2- 7 498 702

## Description

### Technical Field

The present invention relates to an electric-operated valve. In particular, the present invention relates to an electric-operated valve which includes a magnet rotor disposed in a can.

### Background Art

Patent Literature 1 and Patent Literature 2 describe examples of an electric-operated valve of the related art. The electric-operated valve in Patent Literature 1 includes a magnet rotor for driving a valve element and a permanent magnet that is rotated together with the magnet rotor. The magnet rotor and the permanent magnet are disposed in a can. A magnetic sensor is mounted on a circuit board disposed above the can. The electric-operated valve in Patent Literature 1 detects magnetism of the permanent magnet by the magnetic sensor to obtain a rotation angle of the magnet rotor.

The electric-operated valve in Patent Literature 2 includes a magnet rotor for driving a valve element, a magnet drum fixed to a rotation shaft of the magnet rotor, and a magnet disposed at an upper end of the rotation shaft. The magnet rotor, the magnet drum, and the magnet are disposed in a can. A magnetic sensor for detecting a rotation angle and a magnetic sensor for detecting an up-and-down position are disposed outside of the can. The electric-operated valve in Patent Literature 2 detects magnetism of the magnet drum and the magnet by the magnetic sensor for detecting a rotation angle and the magnetic sensor for detecting an up-and-down position to calculate a valve opening degree.

Electric-operated valves of the above kind are also disclosed by EP 3 502 531 A1, US 6 460 567 B1, JP 2003 042325 A, JP 2007 209100 A and US 7 498 702 B2.

### Citation List

### Patent Literature

Patent Literature 1: Japanese Unexamined Patent Application Publication No. 2018-179133
Patent Literature 2: Japanese Unexamined Patent Application Publication No. 2001-12633

### Summary of Invention

### Technical Problem

The electric-operated valves described above include the permanent magnet or the magnet drum. The permanent magnet and the magnet drum are separate members from the magnet rotors of the electric-operated valves. Therefore, the electric-operated valves described above have an increased number of members and a complicated structure, resulting in higher manufacturing costs. To suppress an increase in the number of members, for example, the electric-operated valve in Patent Literature 1 may have a configuration in which the magnetic sensor on the circuit board detects magnetism of the magnet rotor. However, in this configuration, the distance between the circuit board and the magnet rotor is relatively large. Therefore, the magnetic sensor on the circuit board cannot detect the magnetism of the magnet rotor correctly.

Accordingly, it is an object of the present invention to provide an electric-operated valve that is capable of reliably detecting a magnetic flux generated by the magnet rotor with a configuration having a relatively small number of members.

### Solution to Problem

To achieve the object described above, an electric-operated valve according to the present invention comprises the features of claim 1. Preferred embodiment of this electric-operated valve are defined by the subclaims. This electric-operated valve includes a valve body, a can in a cylindrical shape attached to the valve body, a magnet rotor in a cylindrical shape disposed in the can, a valve element driven by rotation of the magnet rotor to open and close a port in the valve body, and a stator disposed outside of the can. One or multiple N poles and one or multiple S poles are circumferentially and alternately arranged on an outer circumferential surface of the magnet rotor and extend in a direction of a rotation axis of the magnet rotor. A magnetic sensor is arranged to face the magnet rotor in a radial direction with the can located in between. When viewed in the direction of the rotation axis, the magnetic sensor is at a position on a straight line that passes through the rotation axis of the magnet rotor and a center of one of multiple pole teeth of the stator.

According to the present invention, the magnet rotor is disposed in the can. The one or multiple N poles and the one or multiple S poles are circumferentially and alternately arranged on the outer circumferential surface of the magnet rotor and extend in the direction of the rotation axis of the magnet rotor. The magnetic sensor is arranged to face the magnet rotor in the radial direction with the can located in between. A magnetic flux generated by magnetic poles (N pole, S pole) of the magnet rotor tends to flow in the radial direction. Therefore, by arranging the magnetic sensor close to and opposite the magnet rotor in the radial direction, the magnetic flux can reach the magnetic sensor efficiently. Consequently, the present invention is capable of reliably detecting the magnetic flux generated by the magnet rotor with a configuration having a relatively small number of members.

When viewed in the direction of the rotation axis, the magnetic sensor is disposed on a straight line that passes through the rotation axis of the magnet rotor and a center (including a substantially central portion) of one of the multiple pole teeth of the stator. In the configuration in which the stator includes the multiple pole teeth, when the magnet rotor stops rotating, either (i) the pole teeth and the magnetic poles of the magnet rotor face each other, or (ii) the pole teeth and portions between adjacent magnetic poles on the outer circumferential surface of the magnet rotor face each other. In the state of (i), a radial component in a magnetic flux in a direction from the N pole to the S pole is maximum at positions of the pole teeth viewed in the direction of the rotation axis, and the magnetic flux which reaches the magnetic sensor is maximum. In the state of (ii), the radial component in the magnetic flux in a direction from the N pole to the S pole is minimum at the positions of the pole teeth viewed in the direction of the rotation axis, and the magnetic flux which reaches the magnetic sensor is minimum. Therefore, the state of (i) and the state of (ii) can be clearly distinguished, and a stop position of the magnet rotor can be obtained with high accuracy. A rotation direction of the magnet rotor can be obtained based on a waveform concerning the magnetic flux detected by the magnetic sensor.

In the present invention, it is preferable that a positioning recess be formed on an inner circumferential surface of the stator, the positioning recess housing the magnetic sensor. In this way, the magnetic sensor can be appropriately positioned with respect to the stator.

In the present invention, it is preferable that the magnet rotor move to a first side in the direction of the rotation axis when closing the port and to a second side in the direction of the rotation axis when opening the port. It is preferable that the magnetic sensor be at a position further toward the first side than a second-side end surface of the magnet rotor when the port is closed and at a position further toward the second side than a first-side end surface of the magnet rotor when the port is fully opened. In this way, the magnet rotor moves in the direction of the rotation axis, and the magnet rotor and the magnetic sensor face each other in the radial direction in any state from the port closed (closed valve state) to the port fully opened (open valve state). Therefore, it is possible to reliably detect the magnetic flux of the magnet rotor and to obtain a rotation angle of the magnet rotor with high accuracy.

In the present invention, it is preferable that the magnet rotor move to a first side in the direction of the rotation axis when closing the port and to a second side in the direction of the rotation axis when opening the port. It is preferable that the magnetic sensor be at a position further toward the second side than the multiple pole teeth of the stator, and the magnetic sensor be arranged to face the magnet rotor in the radial direction with the can located in between when the port is closed. In this way, the magnet rotor that moves in the direction of the rotation axis and the magnetic sensor face each other in the radial direction in any state from the port closed (closed valve state) to the port fully opened (open valve state). Therefore, it is possible to reliably detect the magnetic flux of the magnet rotor and to obtain the rotation angle and the rotation direction of the magnet rotor with high accuracy.

In the present invention, it is preferable that a position of the magnetic sensor in the direction of the rotation axis be within a range corresponding to the entire length of the magnet rotor in any state from the port closed to the port fully opened. In this way, the magnet rotor and the magnetic sensor face each other in the radial direction in any state from the port closed (closed valve state) to the port fully opened (open valve state). Therefore, it is possible to reliably detect the magnetic flux and to obtain the rotation angle and the rotation direction of the magnet rotor with high accuracy.

In the present invention, it is preferable that a position of the stator in the direction of the rotation axis be within the range corresponding to the entire length of the magnet rotor in any state from the port closed to the port fully opened. In this way, in any state from the port closed (closed valve state) to the port fully opened (open valve state), magnetic force of the stator can be efficiently applied to the magnet rotor and the magnet rotor can be efficiently rotated.

In the present invention, it is preferable that the electric-operated valve further include a case that houses the can and the stator. It is preferable that the case further house a circuit board. It is preferable that the magnetic sensor be connected to the circuit board by a wire. In this way, the magnetic sensor can be arranged away from the circuit board. Therefore, a position and a posture of the circuit board can be set relatively freely. Advantageous Effects of Invention

According to the present invention, it is possible to reliably detect a magnetic flux generated from the magnet rotor with the configuration having the relatively small number of members.

### Brief Description of Drawings

[Fig. 1] Fig. 1 is a longitudinal sectional view of an electric-operated valve according to a first embodiment of the present invention in a closed valve state.
[Fig. 2] Fig. 2 is a longitudinal sectional view of the electric-operated valve in Fig. 1 in an open valve state.
[Fig. 3] Fig. 3 illustrates a magnet rotor and a stator of the electric-operated valve in Fig. 1.
[Fig. 4] Fig. 4 is a longitudinal sectional view of the stator of the electric-operated valve in Fig. 1.
[Fig. 5] Fig. 5 is a longitudinal sectional view of an electric-operated valve according to a second embodiment of the present invention in a closed valve state.

### Description of Embodiments

### (First Embodiment)

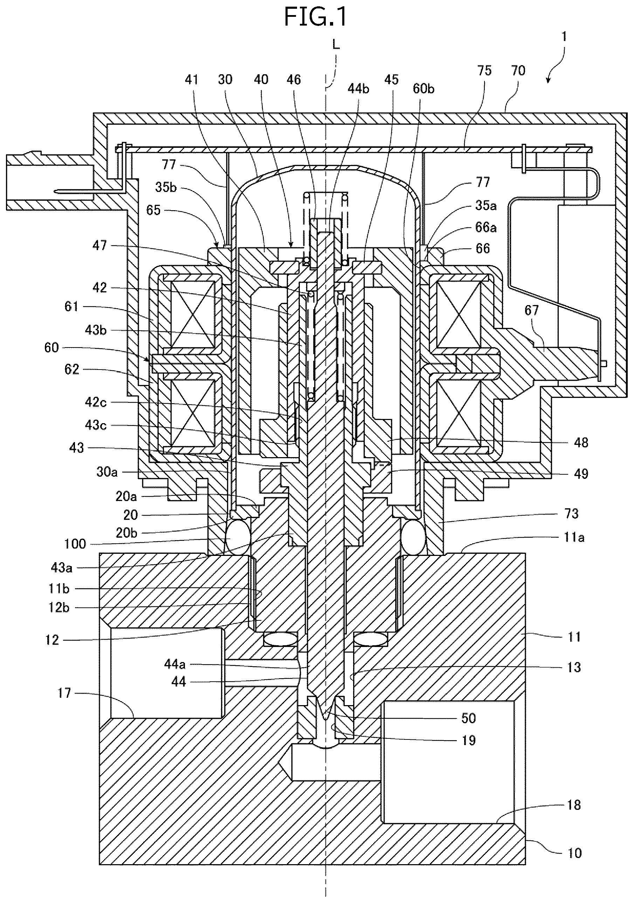

An electric-operated valve according to a first embodiment of the present invention is described below with reference to Fig. 1 to Fig. 4. An electric-operated valve 1 according to the present embodiment is, for example, used for adjusting the flow rate of refrigerant in a refrigeration cycle or the like. An electric-operated valve according to a second embodiment is used for the same purpose as the electric-operated valve according to the first embodiment.

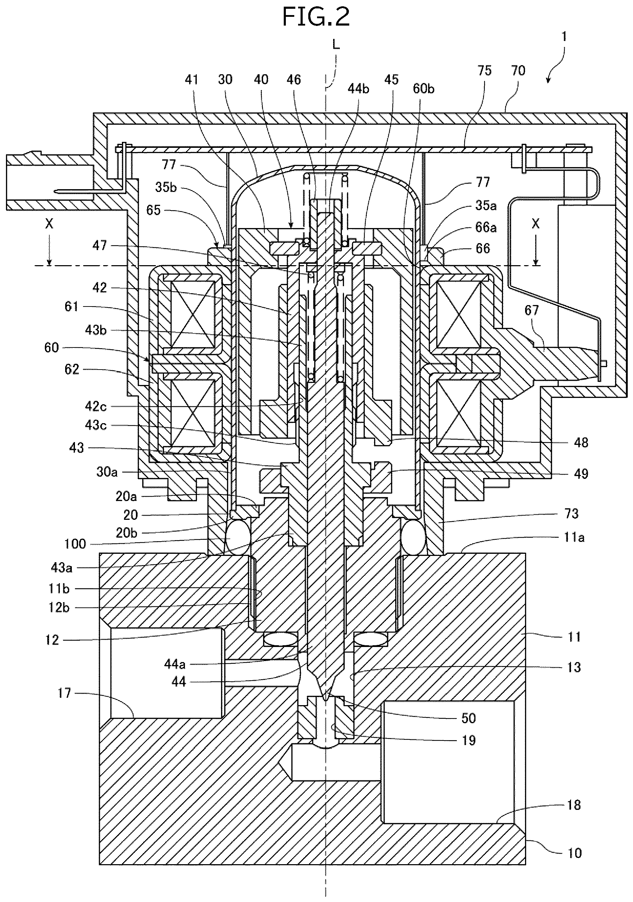

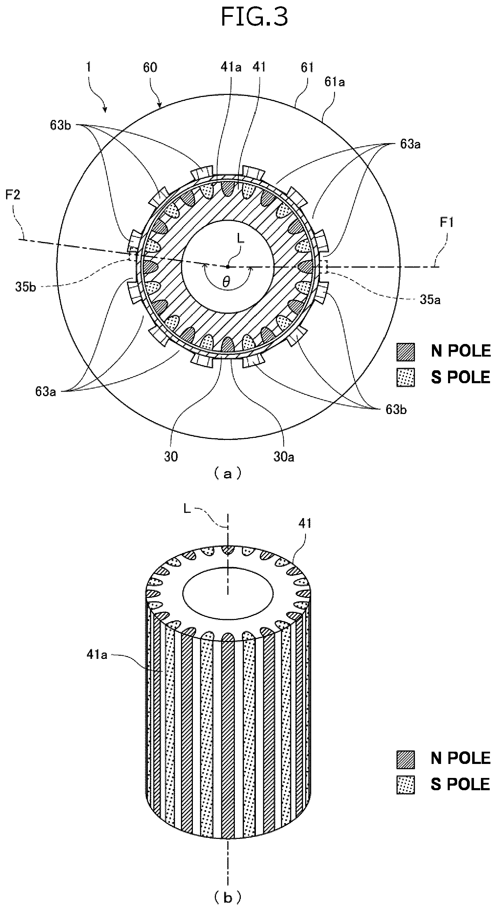

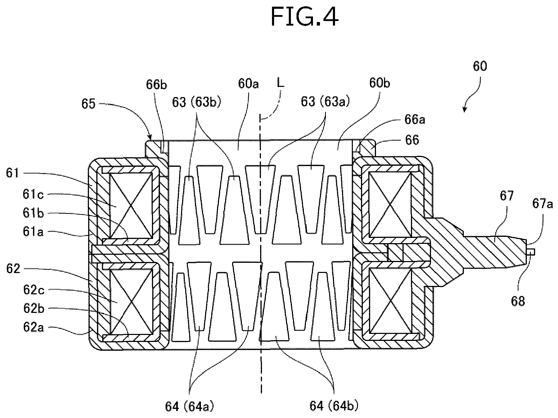

Fig. 1 and Fig. 2 are sectional views (longitudinal sectional views) taken along an axis L of the electric-operated valve according to the first embodiment of the present invention. Fig. 1 illustrates the electric-operated valve in a closed valve state. Fig. 2 illustrates the electric-operated valve in an open valve state. Fig. 3 illustrates a magnet rotor and a stator of the electric-operated valve in Fig. 1. Fig. 3(a) is a sectional view taken along line X-X of Fig. 2. In Fig. 3(a), only a can, the magnet rotor, and a yoke of an upper stator of the stator are illustrated. In Fig. 3(a), a position of the magnetic sensor is indicated by a dashed line. Fig. 3(b) is a perspective view of the magnet rotor. In Fig. 3(a) and 3(b), magnetic poles (N pole, S pole) of the magnet rotor are schematically illustrated. Fig. 4 is a longitudinal sectional view of the stator of the electric-operated valve in Fig. 1. Fig. 4 illustrates a section taken along a straight line F1 and a straight line F2 of Fig. 3(a).

As illustrated in Fig. 1 and Fig. 2, the electric-operated valve 1 includes a valve body 10, a can 30, magnetic sensors 35a, 35b, a driving section 40, a valve element 50, a stator 60, and a case 70.

The valve body 10 is made of, for example, a metal such as aluminum alloy. The valve body 10 includes a main body portion 11 and a cylindrical portion 12. The main body portion 11 has a rectangular parallelepiped shape. The cylindrical portion 12 protrudes upward from an upper surface 11a of the main body portion 11. A valve chamber 13 is provided inside the main body portion 11. A flow passage 17 is provided in the main body portion 11 and extends to the left in Fig. 1. A flow passage 18 is provided in the main body portion 11 and extends to the right in Fig. 1. The flow passage 17 is connected to the valve chamber 13. The flow passage 18 is connected to the valve chamber 13 via a port 19 that is open to the valve chamber 13.

An external thread portion 12b is formed on a part of an outer circumferential surface of the cylindrical portion 12. An internal thread portion 11b is formed so as to open on the upper surface 11a of the main body portion 11. The external thread portion 12b is screwed into the internal thread portion 11b. Thus, the main body portion 11 and the cylindrical portion 12 are integrally coupled. An inner space of the cylindrical portion 12 is connected to the valve chamber 13.

The valve body 10 further includes a flange portion 20. The flange portion 20 is made of, for example, a metal such as stainless steel. The flange portion 20 has an annular plate shape. An inner peripheral edge 20a of the flange portion 20 is joined to an upper end of the cylindrical portion 12 by brazing or other means.

The can 30 is made of, for example, a metal such as stainless steel. The can 30 has a cylindrical shape with its upper end closed. A lower end of the can 30 is joined to an outer peripheral edge 20b of the flange portion 20 by welding or other means. The driving section 40 is disposed in the can 30.

The magnetic sensors 35a, 35b are, for example, Hall ICs. The Hall IC includes a Hall element and outputs a signal corresponding to a direction and magnitude of a magnetic flux density that passes through a magnetically sensitive surface. The magnetic sensors 35a, 35b may be magnetic sensors of types other than the Hall ICs. A rotation angle and a rotation direction of the magnet rotor 41 can be obtained based on the signals outputted by the magnetic sensors 35a, 35b. The configuration in the present invention includes two magnetic sensors 35a, 35b. However, a configuration including only one magnetic sensor may be used.

The magnetic sensor 35a is housed in a positioning recess 66a of the stator 60. The magnetic sensor 35b is housed in a positioning recess 66b of the stator 60. The magnetic sensors 35a, 35b are disposed on an outer circumferential surface 30a of the can 30. It is preferable that the magnetic sensors 35a, 35b be disposed in contact with the outer circumferential surface 30a of the can 30. The magnetic sensors 35a, 35b may be spaced apart from the outer circumferential surface 30a of the can 30 to such an extent that magnetism of the magnet rotor 41 can be detected. That is, the magnetic sensors 35a and 35b may be disposed close to the outer circumferential surface 30a of the can 30. The magnetic sensors 35a, 35b are disposed so that their respective magnetically sensitive surfaces are along the outer circumferential surface 30a of the can 30.

The driving section 40 drives the valve element 50 in an up-and-down direction. The driving section 40 includes the magnet rotor 41, a valve stem holder 42, a guide bush 43, and a valve stem 44.

The magnet rotor 41 has a substantially cylindrical shape. An outer diameter of the magnet rotor 41 is slightly smaller than an inner diameter of the can 30. Multiple N poles and multiple S poles are provided on an outer circumferential surface 41a of the magnet rotor 41. The multiple N poles and multiple S poles extend in a direction of the axis L and are arranged alternately and circumferentially at equal intervals. One N-pole and one S-pole may be provided on the outer circumferential surface 41a of the magnet rotor 41. In the present embodiment, twelve N poles and twelve S poles are arranged alternately and circumferentially at 15-degree intervals. The magnet rotor 41 is rotatably disposed in the can 30. Fig. 3(a) and Fig. 3(b) illustrate images of the arrangement of the N poles and S poles of the magnet rotor 41. In Fig. 3(a) and Fig. 3(b), a shaded area schematically illustrates the N-pole and a dotted area schematically illustrates the S-pole. A rotation axis of the magnet rotor 41 is coincident with the axis L.

The valve stem holder 42 has a cylindrical shape with its upper end closed. A supporting ring 45 is fixed to the upper end of the valve stem holder 42 by caulking. The magnet rotor 41 and the valve stem holder 42 are integrally coupled via the supporting ring 45. An internal thread portion 42c is formed on an inner circumferential surface of the valve stem holder 42.

The guide bush 43 includes a large-diameter cylindrical portion 43a and a small-diameter cylindrical portion 43b. An outer diameter of the large-diameter cylindrical portion 43a is larger than an outer diameter of the small-diameter cylindrical portion 43b. The small-diameter cylindrical portion 43b is coaxially connected to an upper end of the large-diameter cylindrical portion 43a. An external thread portion 43c is formed on an outer circumferential surface of the small-diameter cylindrical portion 43b. The external thread portion 43c is screwed into the internal thread portion 42c of the valve stem holder 42. The large-diameter cylindrical portion 43a is press-fitted inside the cylindrical portion 12 of the valve body 10. The guide bush 43 and the valve body 10 are integrally coupled.

The valve stem 44 includes a body portion 44a in a round columnar shape and an upper small-diameter portion 44b in a round columnar shape. A diameter of the upper small-diameter portion 44b is smaller than a diameter of the body portion 44a. The upper small-diameter portion 44b is coaxially connected to an upper end of the body portion 44a. The upper small-diameter portion 44b extends through the valve stem holder 42. A push nut 46, which is a retainer, is attached to the upper small-diameter portion 44b. The valve stem 44 includes a step portion between the body portion 44a and the upper small-diameter portion 44b. A compressed coil spring 47 is disposed between the step portion and the valve stem holder 42. The valve stem 44 is pushed downward by the compressed coil spring 47.

An upper stopper member 48 is attached to the valve stem holder 42. A lower stopper member 49 is attached to the large-diameter cylindrical portion 43a of the guide bush 43. When the valve stem holder 42 rotates and reaches a lower limit position, the upper stopper member 48 comes into contact with the lower stopper member 49 and further rotation of the valve stem holder 42 is restricted.

The valve element 50 is integrally formed at a lower end of the valve stem 44. The valve element 50 is driven by the driving section 40 to move in the up-and-down direction. The valve element 50 opens and closes the port 19 that is open to the valve chamber 13.

The stator 60 has a substantially cylindrical shape. The stator 60 includes a fitting hole 60b defined by an inner circumferential surface 60a. The fitting hole 60b has an inner diameter that is substantially the same as an outer diameter of the can 30. The can 30 is fitted into the fitting hole 60b of the stator 60. The stator 60 is disposed outside of the can 30. The stator 60 includes an upper stator 61, a lower stator 62, and a mold 65 that is made of a synthetic resin.

The upper stator 61 and the lower stator 62 are arranged in the up-and-down direction, and the upper stator 61 is on the lower stator 62. As illustrated in Fig. 4, the upper stator 61 includes a yoke 61a and a coil 61c that is wound around the yoke 61a via a bobbin 61b. The yoke 61a includes multiple pole teeth 63, which are claw poles. The multiple pole teeth 63 are arranged circumferentially at equal intervals. In the present invention, the yoke 61a includes 24 pole teeth 63. The multiple pole teeth 63 include downward pole teeth 63a and upward pole teeth 63b. Tip ends (tapered tip portions) of the downward pole teeth 63a face downward, and tip ends of the upward pole teeth 63b face upward. The multiple downward pole teeth 63a and the multiple upward pole teeth 63b are circumferentially alternately arranged.

The lower stator 62 is similar to or the same as the upper stator 61. The lower stator 62 includes a yoke 62a, a bobbin 62b, a coil 62c, and multiple pole teeth 64. The pole teeth 64 are claw poles and include downward pole teeth 64a and upward pole teeth 64b. The lower stator 62 is circumferentially shifted by half the interval between the multiple pole teeth 63 with respect to the upper stator 61. In the present embodiment, the interval between the multiple pole teeth 63 and the interval between the multiple pole teeth 64 are each 15 degrees (360 degrees/24). The lower stator 62 is circumferentially shifted by 7.5 degrees (15 degrees/2) with respect to the upper stator 61. The upper stator 61, the lower stator 62, and the magnet rotor 41 constitute a stepping motor. Although the stator 60 includes the pole teeth, which are the claw poles in the present embodiment, the stator 60 may include other types of pole teeth.

The mold 65 fills the upper stator 61 and the lower stator 62. The mold 65, the multiple pole teeth 63, and the multiple pole teeth 64 constitute the inner circumferential surface 60a of the stator 60. The mold 65 includes an annular portion 66 and a terminal supporting portion 67.

The annular portion 66 has an annular shape. The annular portion 66 has an inner diameter that is the same as the outer diameter of the can 30. The annular portion 66 is disposed on an upper surface of the upper stator 61. The positioning recesses 66a, 66b are formed on an inner circumferential surface of the annular portion 66 (i.e., at an upper portion of the inner circumferential surface 60a). The positioning recesses 66a, 66b are recesses that house the magnetic sensors 35a, 35b. The positioning recesses 66a, 66b are upwardly open. The positioning recess 66a, which is one of the positioning recesses, houses the magnetic sensor 35a. The positioning recess 66b, which is the other of the positioning recesses, houses the magnetic sensor 35b.

The magnetic sensors 35a, 35b are arranged to face the outer circumferential surface 41a of the magnet rotor 41 in a radial direction with the can located in between in any state from the port 19 closed (closed valve state) to the port 19 fully opened (open valve state). In addition, the magnetic sensors 35a, 35b are at positions lower than an upper end surface of the magnet rotor 41 in the closed valve state and upper than a lower end surface of the magnet rotor 41 in the open valve state. The magnetic sensors 35a, 35b are at the positions upper than the multiple pole teeth 63.

When viewed in the direction of the rotation axis of the magnet rotor 41, the magnetic sensor 35a is at the position on the straight line F1 that passes through the rotation axis (the axis L) and a center of one of the pole teeth 63 of the upper stator 61. The "center" of a pole tooth 63 includes a substantially central portion in addition to the center, and the same applies to the following description. In the configuration including the yoke 61a with the multiple pole teeth 63, which are claw poles, when the magnet rotor 41 stops rotating, either (i) the pole teeth 63 and the magnetic poles of the magnet rotor 41 face each other, or (ii) the pole teeth 63 and portions between adjacent magnetic poles on the outer circumferential surface 41a of the magnet rotor 41 face each other. In the state of (i), a radial component in a magnetic flux in a direction from the N pole to the S pole is maximum at positions of the pole teeth 63 viewed in the direction of the rotation axis, and the magnetic flux which reaches the magnetic sensor 35a is maximum. In the state of (ii), the radial component in the magnetic flux in a direction from the N pole to the S pole is minimum at the positions of the pole teeth 63 viewed in the direction of the rotation axis, and the magnetic flux which reaches the magnetic sensor 35a is minimum. Therefore, the state of (i) and the state of (ii) can be clearly distinguished, and a stop position of the magnet rotor 41 can be obtained with high accuracy. The rotation direction of the magnet rotor 41 can be obtained based on a detected waveform concerning the magnetic flux detected by the magnetic sensors 35a, 35b.

When viewed in the direction of the rotation axis of the magnet rotor 41, the magnetic sensor 35b is at the position on the straight line F2 that passes through the rotation axis and a center of one of the pole teeth 64 of the lower stator 62. In the magnetic sensor 35b, similar to or the same as the above, the state of (i) and the state of (ii) can be clearly distinguished, and the stop position of the magnet rotor can be obtained with high accuracy.

It is preferable that the magnetic sensor 35a and the magnetic sensor 35b be arranged with an interval θ [degree] shown in a following expression (1): $θ = \left(90/n\right) + \left(360\times m\right) / n$ (1) where n is half the number of pole teeth which one of the stators includes, m is an integer, and θ < 360 degrees.

When the magnetic sensors 35a, 35b are arranged so as to hold the above expression (1), one of the magnetic sensors 35a, 35b faces the magnetic pole of the magnet rotor 41, and the other thereof faces a portion between adjacent magnetic poles on the outer circumferential surface 41a of the magnet rotor 41. Consequently, when the magnetic flux detected by the one of the magnetic sensors 35a, 35b is maximum, the magnetic flux detected by the other thereof is minimum. Therefore, the rotation angle of the magnet rotor 41 can be obtained with higher accuracy. The rotation direction of the magnet rotor 41 can be obtained based on the waveform concerning the magnetic flux detected by the magnetic sensors 35a, 35b.

The terminal supporting portion 67 extends to the side (right in Fig. 1) from the upper stator 61 and the lower stator 62. The terminal supporting portion 67 has multiple terminals 68 embedded therein. The multiple terminals 68 are connected to the coil 61c of the upper stator 61 and the coil 62c of the lower stator 62. The multiple terminals 68 protrude from a tip end 67a of the terminal supporting portion 67 and are connected to a circuit board 75 described later by a flexible board or the like.

The case 70 has a substantially rectangular parallelepiped box shape. The case 70 is disposed so as to house the can 30 and the stator 60. The case 70 includes a tubular portion 73 in a cylindrical shape that protrudes toward the valve body 10. The tubular portion 73 is disposed to surround the cylindrical portion 12 of the valve body 10. The tubular portion 73 is disposed to surround the cylindrical portion 12 of the valve body 10. A seal 100 is disposed in a compressed state between the tubular portion 73 and the cylindrical portion 12**.** The seal 100 is an O-ring in an annular shape made of an elastic material such as a rubber material.

The case 70 houses the circuit board 75. The circuit board 75 is a printed circuit board on which electronic components are mounted. The circuit board 75 is arranged above the can 30 in a posture perpendicular to the axis L. The circuit board 75 can be arranged at any position and have any posture. The circuit board 75 is connected to the magnetic sensors 35a, 35b by wires 77. The wires 77 are lead wires or flexible boards or the like that can be bent and stretched and can maintain their shape to be self-standing. A calculation device such as a computer or other device may be mounted on the circuit board 75. The calculation device calculates, for example, the rotation angle of the magnet rotor 41 and a valve opening degree (opening degree of the port 19) based on the signals outputted by the magnetic sensors 35a, 35b.

In the electric-operated valve 1, the axes of the cylindrical portion 12 of the valve body 10, the port 19, the can 30, the magnet rotor 41, the valve stem holder 42, the guide bush 43, the valve stem 44, the valve element 50, the stator 60 (the upper stator 61, the lower stator 62, the annular portion of the mold 65), and the tubular portion 73 of the case 70 are coincident with the axis L. In other words, they are all coaxially disposed. The direction of the axis L coincides with the up-and-down direction.

The operation of the electric-operated valve 1 is described below.

In the electric-operated valve 1, a current is applied to the upper stator 61 and the lower stator 62 to rotate the magnet rotor 41 in one direction. The valve stem holder 42 rotates together with the magnet rotor 41. The screw feed action between the internal thread portion 42c of the valve stem holder 42 and the external thread portion 43c of the guide bush 43 moves the magnet rotor 41 and the valve stem holder 42 downward (i.e., to a first side in the direction of the rotation axis). The valve stem 44 moves downward together with the valve stem holder 42, and the valve element 50 closes the port 19 (closed valve state).

Alternatively, in the electric-operated valve 1, a current is applied to the upper stator 61 and the lower stator 62 to rotate the magnet rotor 41 in the other direction. The valve stem holder 42 rotates together with the magnet rotor 41. The screw feed action between the internal thread portion 42c of the valve stem holder 42 and the external thread portion 43c of the guide bush 43 moves the magnet rotor 41 and the valve stem holder 42 upward (i.e., to a second side in the direction of the rotation axis). The valve stem 44 moves upward together with the valve stem holder 42, and the valve element 50 opens the port 19 (open valve state).

When the magnet rotor 41 rotates, the positional relationships between each N pole and each S pole, which are arranged on the outer circumferential surface 41a, and the magnetic sensors 35a, 35b change. The directions and the magnitudes of the magnetic flux density detected by the magnetic sensors 35a, 35b change. Consequently, the signals outputted by the magnetic sensors 35a, 35b change corresponding to the rotation angle of the magnet rotor 41 and the rotation angle and the rotation direction of the magnet rotor 41 can be obtained based on the signals.

In the manner described above, according to the electric-operated valve 1 in the present embodiment, the multiple N poles and the multiple S poles are circumferentially and alternately arranged on the outer circumferential surface 41a of the magnet rotor 41 disposed in the can 30 and extend in the direction of the rotation axis of the magnet rotor 41. The magnetic sensors 35a, 35b are arranged on the outer circumferential surface 30a of the can 30 to face the magnet rotor 41 in the radial direction with the can 30 located in between. The magnetic flux generated by the magnetic poles (N poles, S poles) of the magnet rotor 41 tends to flow in the radial direction. Therefore, by arranging the magnetic sensors 35a, 35b close to and opposite the magnet rotor 41 in the radial direction, the magnetic flux can reach the magnetic sensors 35a, 35b efficiently. Consequently, it is possible to reliably detect the magnetic flux generated by the magnet rotor 41 with the configuration having a relatively small number of members.

The positioning recesses 66a, 66b that house the magnetic sensors 35a, 35b are formed on the inner circumferential surface 60a of the stator 60. In this way, the magnetic sensors 35a, 35b can be appropriately positioned with respect to the pole teeth 63, 64 of the stator 60.

The magnet rotor 41 moves downward when closing the port 19 and upward when opening the port 19. The magnetic sensors 35a, 35b are at the upper position than the multiple pole teeth 63 of the upper stator 61 of the stator 60. The magnetic sensors 35a, 35b are arranged to face the magnet rotor 41 in the radial direction with the can 30 located in between when the port is closed. In this way, the magnet rotor 41 and the magnetic sensors 35a, 35b are to face each other in the radial direction in any state from the closed valve state to the open valve state. Therefore, it is possible to reliably detect the magnetic flux of the magnet rotor 41 and to obtain the rotation angle and the rotation direction of the magnet rotor 41 with high accuracy in any state from the closed valve state to the open valve state.

The electric-operated valve 1 includes the case 70 that houses the can 30 and the stator 60. The circuit board 75 is housed in the case 70. The magnetic sensors 35a, 35b are connected to the circuit board 75 by the wires 77. In this way, the magnetic sensors 35a, 35b can be arranged away from the circuit board 75. Therefore, a position and posture of the circuit board 75 can be set relatively freely.

### (Second Embodiment)

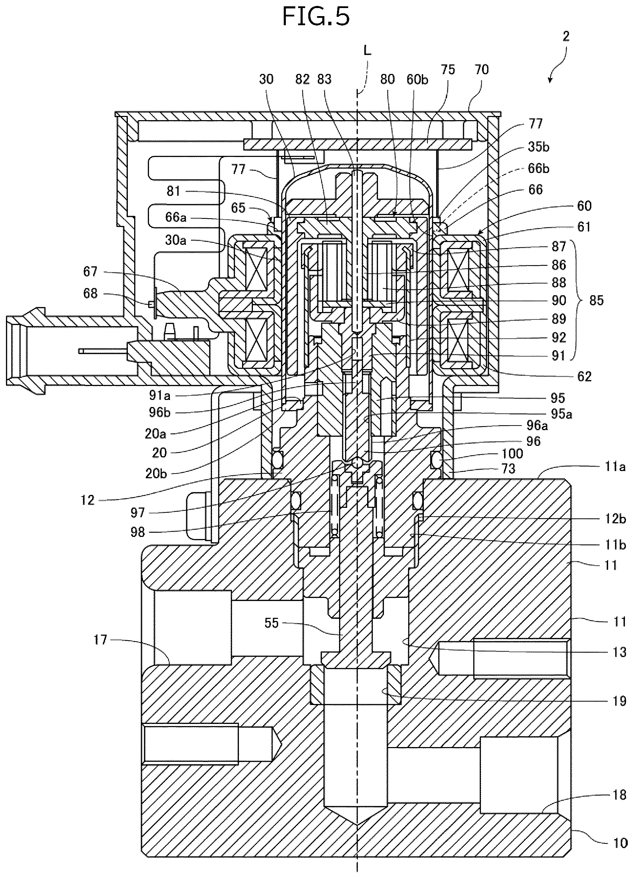

An electric-operated valve according to a second embodiment of the present invention is described below with reference to Fig. 5. Fig. 5 is a longitudinal sectional view of the electric-operated valve according to the second embodiment.

As illustrated in Fig. 5, an electric-operated valve 2 according to the second embodiment includes the valve body 10, the can 30, the magnetic sensors 35a, 35b, a driving section 80, a valve element 55, the stator 60, and the case 70.

The electric-operated valve 2 has the same (including substantially the same) configuration as the electric-operated valve 1 according to the above first embodiment except for the driving section 80 and the valve element 55. The driving section 80 and the valve element 55 have different configurations from those of the electric-operated valve 1. In the following description, elements that are the same as those of the first embodiment are denoted by corresponding reference signs, and descriptions of these elements are omitted.

The driving section 80 drives the valve element 55 in an up-and-down direction. The driving section 80 includes a magnet rotor 81, a planetary gear mechanism 85, a guide member 95, an elevating shaft 96, a ball 97, and a valve opening spring 98.

The magnet rotor 81 has a substantially cylindrical shape. An outer diameter of the magnet rotor 81 is slightly smaller than the inner diameter of the can 30. The multiple N poles and the multiple S poles are provided on an outer circumferential surface of the magnet rotor 81 as on the magnet rotor 41 of the above first embodiment. A rotation axis of the magnet rotor 81 is coincident with the axis L. The magnet rotor 81 does not move in the direction of the rotation axis when it rotates. An upper end of the magnet rotor 81 is integrally coupled with a rotor shaft 83 via a rotor supporting member 82. The upper stator 61, the lower stator 62, and the magnet rotor 81 constitute a stepping motor.

In the present embodiment, positions of the magnetic sensors 35a, 35b in the direction of the rotation axis are within a range corresponding to the entire length of the magnet rotor 81 (i.e., from a lower end to the upper end of the magnet rotor 81) in any state from the closed valve state to the open valve state. In this way, the magnet rotor 81 and the magnetic sensors 35a, 35b face each other in the radial direction in any state from the closed valve state to the open valve state. Therefore, it is possible to reliably detect a magnetic flux of the magnet rotor 81 and to obtain a rotation angle and a rotation direction of the magnet rotor 81 with high accuracy.

In the present embodiment, positions of the upper stator 61 and the lower stator 62 of the stator 60 in the direction of the rotation axis are within the range corresponding to the entire length of the magnet rotor 81. In this way, in any state from the closed valve state to the open valve state, magnetic force of the upper stator 61 and the lower stator 62 can be efficiently applied to the magnet rotor 81 and the magnet rotor 81 can be efficiently rotated.

The planetary gear mechanism 85 is disposed inside the magnet rotor 81. The planetary gear mechanism 85 includes a sun gear 86, a fixed ring gear 87, multiple planetary gears 88, a carrier 89, an output gear 90, an output shaft 91, and a gear case 92. The sun gear 86 is integral with the rotor supporting member 82. The fixed ring gear 87 is an internal gear. The fixed ring gear 87 is fixed to an upper end of the gear case 92 in a cylindrical shape. The planetary gears 88 are disposed between the sun gear 86 and the fixed ring gear 87. The planetary gears 88 mesh with the sun gear 86 and the fixed ring gear 87. The carrier 89 rotatably supports the multiple planetary gears 88. The output gear 90 has a bottomed cylindrical shape. The output gear 90 is an internal gear. The output gear 90 surrounds the multiple planetary gears 88 and meshes with them. The output shaft 91 has an upper portion that is fixed, by press-fitting or other means, into a hole formed in a bottom portion of the output gear 90. The gear case 92 is attached to the upper end of the cylindrical portion 12 of the valve body 10.

The guide member 95 has a cylindrical shape. The guide member 95 is disposed in the upper end of the cylindrical portion 12 of the valve body 10. An internal thread portion 95a is formed on an inner circumferential surface of the guide member 95.

The elevating shaft 96 has a round columnar shape. An external thread portion 96a is formed on an outer circumferential surface of the elevating shaft 96. The external thread portion 96a is screwed into the internal thread portion 95a of the guide member 95. A flat plate portion 96b protrudes upward from an upper end surface of the elevating shaft 96. The output shaft 91 of the planetary gear mechanism 85 includes a slit 91a. The flat plate portion 96b is disposed in the slit 91a in such a manner as to be movable in the up-and-down direction. The elevating shaft 96 is rotated together with rotation of the output shaft 91. The screw feed action between the external thread portion 96a and the internal thread portion 95a moves the elevating shaft 96 in the up-and-down direction.

The ball 97 is disposed between the elevating shaft 96 and the valve element 55. The valve opening spring 98 is a compression coil spring. The valve opening spring 98 is disposed between the valve element 55 and the valve body 10.

The valve element 55 has a substantially round columnar shape. A lower end of the valve element 55 faces the port 19 in the up-and-down direction. An upper end of the valve element 55 is connected to the elevating shaft 96 via the ball 97. The valve element 55 is pushed upward by the valve opening spring 98.

The operation of the electric-operated valve 2 is described below.

In the electric-operated valve 2, a current is applied to the upper stator 61 and the lower stator 62 to rotate the magnet rotor 81 in one direction. When the magnet rotor 81 rotates, the elevating shaft 96 rotates together with the output shaft 91 of the planetary gear mechanism 85. The screw feed action between the external thread portion 96a of the elevating shaft 96 and the internal thread portion 95a of the guide member 95 moves the elevation shaft 96 downward (to a first side in the direction of the rotation axis). The valve element 55 is pushed downward by the elevating shaft 96, and the valve element 55 closes the port 19 (closed valve state).

Alternatively, in the electric-operated valve 2, a current is applied to the upper stator 61 and the lower stator 62 to rotate the magnet rotor 81 in the other direction. When the magnet rotor 81 rotates, the elevating shaft 96 rotates together with the output shaft 91 of the planetary gear mechanism 85. The screw feed action between the external thread portion 96a of the elevating shaft 96 and the internal thread portion 95a of the guide member 95 moves the elevating shaft 96 upward (to a second side in the direction of the rotation axis). When the elevating shaft 96 moves upward, the valve element 55 is pushed upward by the valve opening spring 98, and the valve element 55 opens the port 19 (open valve state).

When the magnet rotor 81 rotates, the positional relationships between each N pole and each S pole, which are arranged on the outer circumferential surface of the magnet rotor 81, and the magnetic sensors 35a, 35b change. The directions and the magnitudes of the magnetic flux density detected by the magnetic sensors 35a, 35b change. That is, the signals outputted by the magnetic sensors 35a, 35b change corresponding to the rotation angle of the magnet rotor 81 and the rotation angle of the magnet rotor 81 can be obtained based on the signals.

The electric-operated valve 2 of the present embodiment also has the functions and effects similar to or the same as those of the electric-operated valve 1 of the first embodiment described above.

Although the embodiments of the present invention have been described above, the present invention is not limited to these embodiments. Addition and removal of components and design changes may be suitably made to the above-described embodiments by those skilled in the art, and other embodiments obtained by suitably combining features of the above-described embodiments are also within the scope of the present invention as long as they do not depart from the scope of the appended claims.

### Reference Signs List

### (First Embodiment)

1 ... electric-operated valve, 10 ... valve body, 11 ... main body portion, 11a ... upper surface, 11b ... internal thread portion, 12 ... cylindrical portion, 12b ... external thread portion, 13 ... valve chamber, 17, 18 ... flow passage, 19 ... port, 20 ... flange portion, 30 ... can, 30a ... outer circumferential surface, 35a, 35b ... magnetic sensor, 40 ... driving section, 41 ... magnet rotor , 41a ... outer circumferential surface, 42 ... valve stem holder, 42c ... internal thread portion, 43 ... guide bush, 43a ... large-diameter cylindrical portion, 43b ... small-diameter cylindrical portion, 43c ... external thread portion, 44 ... valve stem, 44a ... body portion, 44b ... upper small-diameter portion, 45 ... supporting ring, 46 ... push nut, 47 ... compressed coil spring, 48 ... upper stopper member, 49 ... lower stopper member, 50 ... valve element, 60 ... stator, 60a ... inner circumferential surface, 60b ... fitting hole, 61 ... upper stator, 61a ... yoke, 61b ... bobbin, 61c ... coil, 62 ... lower stator, 62a ... yoke, 62b ... bobbin, 62c ... coil, 63, 64 ... pole teeth, 63a, 64a ... downward pole teeth, 63b, 64b ... upward pole teeth, 65 ... mold, 66 ... annular portion, 66a, 66b ... positioning recess, 67 ... terminal supporting portion, 67a ... tip end, 68 ... terminal, 70 ... case, 100 ... seal

### (Second Embodiment)

2 ... electric-operated valve, 55 ... valve element, 80 ... driving section, 81 ... magnet rotor, 82 ... rotor supporting member, 83 ... rotor shaft, 85 ... planetary gear mechanism, 86 ... sun gear, 87 ... fixed ring gear, 88 ... planetary gear, 89 ... carrier, 90 ... output gear, 91 ... output shaft, 91a ... slit, 92 ... gear case, 95 ... guide member, 95a ... internal thread portion, 96 ... elevating shaft 96, 96a ... external thread portion, 96b ... flat plate portion, 97 ... ball, 98 ... valve opening spring

## Claims

1. An electric-operated valve (1, 2) comprising:
a valve body (10);
a can (30) in a cylindrical shape attached to the valve body (10);
a magnet rotor (41) in a cylindrical shape disposed in the can (30);
a valve element (50, 55) driven by rotation of the magnet rotor (41, 81) to open and close a port (19) in the valve body (10); and
a stator (60) disposed outside of the can (30), wherein one or multiple N poles and one or multiple S poles are circumferentially and alternately arranged on an outer circumferential surface of the magnet rotor (41, 81) and extend in a direction of a rotation axis (L) of the magnet rotor (41, 81),
wherein the magnet rotor (41, 81) and the stator (60) constitute a stepping motor,
wherein the stator (60) includes an upper stator (61) and a lower stator (62),
wherein the upper stator (61) and the lower stator (62) are disposed coaxially with the magnet rotor (41, 83),
and the upper stator (61) is on the lower stator (62),
wherein the upper stator (61) includes a yoke (61a) and a coil (61c) that is wound around the yoke (61a) via a bobbin (61b),
**characterized in that**
the yoke (61a) includes multiple pole teeth (63) which are claw poles,
wherein the multiple pole teeth (63) are arranged circumferentially at equal intervals,
wherein the lower stator (62) is similar to the upper stator (61),
wherein the lower stator (62) is circumferentially shifted by half the interval between the multiple pole teeth (63) with respect to the upper stator (61),
wherein first and second magnetic sensors (35a, 35b) are arranged to face the magnet rotor (41, 81) in a radial direction with the can (30) located in between, and
wherein when viewed in the direction of the rotation axis (L), the first magnetic sensor (35a) is disposed on a straight line (F1) that passes through the rotation axis (L) of the magnet rotor (41, 81) and a center of one of multiple pole teeth (63) of the yoke (61a) of the upper stator (61),
wherein when viewed in the direction of the rotation axis (L), the second magnetic sensor (35b) is disposed on another straight line (F2) that passes through the rotation axis (L) of the magnet rotor (41, 81) and a center of another of multiple pole teeth (64) of the yoke (62a) of the lower stator (62).

2. The electric-operated valve (1, 2) according to Claim 1,
wherein the first magnetic sensor (35a) and the second magnetic sensor (35b) are arranged with an interval θ [degree] shown in a following expression (1):$θ = \left(90/n\right) + \left(360\times m\right) / n$ (1) where n is half the number of pole teeth (63, 64) which one of the stators (61, 62) includes, m is an integer, and θ < 360 degrees.

3. The electric-operated valve (1, 2) according to any one of Claims 1 or 2, wherein positioning recesses (66a, 66b) are formed on an inner circumferential surface (60a) of the stator (60), the positioning recesses (66a, 66b) housing the magnetic sensors (35a, 35b).

4. The electric-operated valve (1, 2) according to any one of Claims 1 to 3,
wherein the magnet rotor (41, 81) moves to a first side in the direction of the rotation axis (L) when closing the port (19) and to a second side in the direction of the rotation axis (L) when opening the port (19), and
wherein the magnetic sensors (35a, 35b) are at a position further toward the first side than a second-side end surface of the magnet rotor (41, 81) when the port (19) is closed and at a position further toward the second side than a first-side end surface of the magnet rotor (41, 81) when the port (19) is fully opened.

5. The electric-operated valve (1, 2) according to any one of Claims 1 to 3,
wherein the magnet rotor (41, 81) moves to a first side in the direction of the rotation axis (L) when closing the port (19) and to a second side in the direction of the rotation axis (L) when opening the port (19),
wherein the magnetic sensors (35a, 35b) are at a position further toward the second side than the multiple pole teeth (63, 64) of the stator (60), and
wherein the magnetic sensors (35a, 35b) are arranged to face the magnet rotor (41, 81) in the radial direction with the can (30) located in between when the port (19) is closed.

6. The electric-operated valve (1, 2) according to any one of Claims 1 to 5, wherein a position of the magnetic sensors (35a, 35b) in the direction of the rotation axis (L) is within a range corresponding to an entire length of the magnet rotor (41, 81) in any state from the port (19) closed to the port (19) fully open.

7. The electric-operated valve (1, 2) according to Claim 6, wherein a position of the stator (60) in the direction of the rotation axis (L) is within the range corresponding to the entire length of the magnet rotor (41, 81) in any state from the port (19) closed to the port (19) fully open.

8. The electric-operated valve (1, 2) according to any one of Claims 1 to 7, further comprising:
a case (70) that houses the can (30) and the stator (60),
wherein the case (70) further houses a circuit board (75), and
wherein the magnetic sensors (35a, 35b) are connected to the circuit board by wires (77).

## Patentansprüche

1. Elektrisch betriebenes Ventil (1, 2), umfassend:
einen Ventilkörper (10);
ein Gehäuse (30) in einer zylindrischen Form, das an dem Ventilkörper (10) angebracht ist;
einen Magnetrotor (41) in einer zylindrischen Form, der in dem Gehäuse (30) angeordnet ist;
ein Ventilelement (50, 55), das durch Drehung des Magnetrotors (41, 81) angetrieben wird, um eine Öffnung (19) in dem Ventilkörper (10) zu öffnen und zu schließen; und
einen Stator (60), der außerhalb des Gehäuses (30) angeordnet ist, wobei ein oder mehrere N-Pole und ein oder mehrere S-Pole in Umfangsrichtung und abwechselnd auf einer Außenumfangsfläche des Magnetrotors (41, 81) angeordnet sind und sich in einer Richtung einer Drehachse (L) des Magnetrotors (41, 81) erstrecken,
wobei der Magnetrotor (41, 81) und der Stator (60) einen Schrittmotor bilden,
wobei der Stator (60) einen oberen Stator (61) und einen unteren Stator (62) beinhaltet,
wobei der obere Stator (61) und der untere Stator (62) koaxial mit dem Magnetrotor (41, 83) angeordnet sind,
und der obere Stator (61) auf dem unteren Stator (62) ist,
wobei der obere Stator (61) ein Joch (61a) und eine Spule (61c) beinhaltet, die über einen Spulenkörper (61b) um das Joch (61a) gewickelt ist,
**dadurch gekennzeichnet, dass** das Joch (61a) mehrere Polzähne (63) beinhaltet, die Klauenpole sind,
wobei die mehreren Polzähne (63) in Umfangsrichtung in gleichen Intervallen angeordnet sind,wobei der untere Stator (62) dem oberen Stator (61) ähnlich ist,
wobei der untere Stator (62) in Umfangsrichtung um die Hälfte des Intervalls zwischen den mehreren Polzähnen (63) in Bezug auf den oberen Stator (61) verschoben ist,
wobei erste und zweite Magnetsensoren (35a, 35b) so angeordnet sind, dass sie dem Magnetrotor (41, 81) in einer radialen Richtung zugewandt sind, wobei das Gehäuse (30) dazwischen angeordnet ist, und
wobei, wenn in der Richtung der Drehachse (L) betrachtet, der erste Magnetsensor (35a) auf einer geraden Linie (F1) angeordnet ist, die durch die Drehachse (L) des Magnetrotors (41, 81) und eine Mitte von einem der mehreren Polzähne (63) des Jochs (61a) des oberen Stators (61) verläuft,
wobei, wenn in der Richtung der Drehachse (L) betrachtet, der zweite Magnetsensor (35b) auf einer anderen geraden Linie (F2) angeordnet ist, die durch die Drehachse (L) des Magnetrotors (41, 81) und eine Mitte von einem anderen der mehreren Polzähne (64) des Jochs (62a) des unteren Stators (62) verläuft.

2. Elektrisch betriebenes Ventil (1, 2) nach Anspruch 1,
wobei der erste Magnetsensor (35a) und der zweite Magnetsensor (35b) mit einem Intervall θ [Grad] angeordnet sind, das in einem folgenden Ausdruck (1) dargestellt ist:$θ = \left(90/n\right) + \left(360\times m\right) / n$ (1) wobei n die Hälfte der Anzahl von Polzähnen (63, 64) ist, die einer der Statoren (61, 62) beinhaltet, m eine ganze Zahl ist und θ < 360 Grad ist.

3. Elektrisch betriebenes Ventil (1, 2) nach einem der Ansprüche 1 oder 2, wobei Positionierungsaussparungen (66a, 66b) auf einer Innenumfangsfläche (60a) des Stators (60) ausgebildet sind, wobei die Positionierungsaussparungen (66a, 66b) die Magnetsensoren (35a, 35b) aufnehmen.

4. Elektrisch betriebenes Ventil (1, 2) nach einem der Ansprüche 1 bis 3,
wobei sich der Magnetrotor (41, 81) zu einer ersten Seite in der Richtung der Drehachse (L) bewegt, wenn die Öffnung (19) geschlossen wird, und zu einer zweiten Seite in der Richtung der Drehachse (L) bewegt, wenn die Öffnung (19) geöffnet wird, und
wobei sich die Magnetsensoren (35a, 35b) an einer Position befinden, die weiter zu der ersten Seite hin liegt als eine Endfläche der zweiten Seite des Magnetrotors (41, 81), wenn die Öffnung (19) geschlossen ist, und an einer Position, die weiter zu der zweiten Seite hin liegt als eine Endfläche der ersten Seite des Magnetrotors (41, 81), wenn die Öffnung (19) vollständig geöffnet ist.

5. Elektrisch betriebenes Ventil (1, 2) nach einem der Ansprüche 1 bis 3,
wobei sich der Magnetrotor (41, 81) zu einer ersten Seite in der Richtung der Drehachse (L) bewegt, wenn die Öffnung (19) geschlossen wird, und zu einer zweiten Seite in der Richtung der Drehachse (L) bewegt, wenn die Öffnung (19) geöffnet wird,
wobei sich die Magnetsensoren (35a, 35b) an einer Position befinden, die weiter zu der zweiten Seite hin liegt als die mehreren Polzähne (63, 64) des Stators (60), und
wobei die Magnetsensoren (35a, 35b) so angeordnet sind, dass sie dem Magnetrotor (41, 81) in der radialen Richtung zugewandt sind, wobei das Gehäuse (30) dazwischen angeordnet ist, wenn die Öffnung (19) geschlossen ist.

6. Elektrisch betriebenes Ventil (1, 2) nach einem der Ansprüche 1 bis 5, wobei eine Position der Magnetsensoren (35a, 35b) in der Richtung der Drehachse (L) innerhalb eines Bereichs liegt, der einer gesamten Länge des Magnetrotors (41, 81) in einem beliebigen Zustand von der geschlossenen Öffnung (19) zu der vollständig geöffneten Öffnung (19) entspricht.

7. Elektrisch betriebenes Ventil (1, 2) nach Anspruch 6, wobei eine Position des Stators (60) in der Richtung der Drehachse (L) innerhalb des Bereichs liegt, der der gesamten Länge des Magnetrotors (41, 81) in einem beliebigen Zustand von der geschlossenen Öffnung (19) zu der vollständig geöffneten Öffnung (19) entspricht.

8. Elektrisch betriebenes Ventil (1, 2) nach einem der Ansprüche 1 bis 7, ferner umfassend:
ein Gehäuse (70), welches das Gehäuse (30) und den Stator (60) aufnimmt,
wobei das Gehäuse (70) ferner eine Leiterplatte (75) aufnimmt, und
wobei die Magnetsensoren (35a, 35b) durch Drähte (77) mit der Leiterplatte verbunden sind.

## Revendications

1. Soupape à commande électrique (1, 2) comportant :
un corps de soupape (10) ;
une enveloppe (30) de forme cylindrique fixée au corps de soupape (10) ;
un rotor à aimant (41) de forme cylindrique disposé dans l'enveloppe (30) ;
un élément de soupape (50, 55) entraîné par une rotation du rotor à aimant (41, 81) pour ouvrir et fermer un orifice (19) dans le corps de soupape (10) ; et
un stator (60) disposé à l'extérieur de l'enveloppe (30), dans lequel un ou de multiples pôles N et un ou de multiples pôles S sont agencés de manière circonférentielle et alternée sur une surface circonférentielle extérieure du rotor à aimant (41, 81) et s'étendent dans une direction d'un axe de rotation (L) du rotor à aimant (41, 81),
dans laquelle le rotor à aimant (41, 81) et le stator (60) constituent un moteur pas à pas,
dans laquelle le stator (60) inclut un stator supérieur (61) et un stator inférieur (62),
dans laquelle le stator supérieur (61) et le stator inférieur (62) sont disposés coaxialement au rotor à aimant (41, 83),
et le stator supérieur (61) est sur le stator inférieur (62),
dans laquelle le stator supérieur (61) inclut une culasse (61a) et une bobine (61c) qui est enroulée autour de la culasse (61a) via une armature (61b),
**caractérisée en ce que** la culasse (61a) inclut de multiples dents polaires (63) qui sont des pôles à griffes,
dans laquelle les multiples dents polaires (63) sont agencées de manière circonférentielle à des intervalles égaux,
dans laquelle le stator inférieur (62) est similaire au stator supérieur (61),
dans laquelle le stator inférieur (62) est décalé de manière circonférentielle de la moitié de l'intervalle entre les multiples dents polaires (63) par rapport au stator supérieur (61),
dans laquelle des premier et second capteurs magnétiques (35a, 35b) sont agencés de manière à faire face au rotor à aimant (41, 81) dans une direction radiale avec l'enveloppe (30) positionnée entre ceux-ci, et
dans laquelle, lorsqu'il est vu dans la direction de l'axe de rotation (L), le premier capteur magnétique (35a) est disposé sur une ligne droite (F1) qui passe par l'axe de rotation (L) du rotor à aimant (41, 81) et un centre de l'une des multiples dents polaires (63) de la culasse (61a) du stator supérieur (61),
dans lequel, lorsqu'il est vu dans la direction de l'axe de rotation (L), le second capteur magnétique (35b) est disposé sur une autre ligne droite (F2) qui passe par l'axe de rotation (L) du rotor à aimant (41, 81) et un centre d'une autre des multiples dents polaires (64) de la culasse (62a) du stator inférieur (62).

2. Soupape à commande électrique (1, 2) selon la revendication 1,
dans laquelle le premier capteur magnétique (35a) et le second capteur magnétique (35b) sont agencés avec un intervalle θ [degré] indiqué dans une expression (1) suivante :$θ = \left(90/n\right) + \left(360\times m\right) / n$ (1)
où n est égal à la moitié du nombre de dents polaires (63, 64) que l'un des stators (61, 62) inclut, m est un entier et θ < 360 degrés.

3. Soupape à commande électrique (1, 2) selon l'une quelconque des revendications 1 ou 2, dans laquelle des évidements de positionnement (66a, 66b) sont formés sur une surface circonférentielle intérieure (60a) du stator (60), les évidements de positionnement (66a, 66b) recevant les capteurs magnétiques (35a, 35b).

4. Soupape à commande électrique (1, 2) selon l'une quelconque des revendications 1 à 3,
dans laquelle le rotor à aimant (41, 81) se déplace jusqu'à un premier côté dans la direction de l'axe de rotation (L) lors de la fermeture de l'orifice (19) et jusqu'à un second côté dans la direction de l'axe de rotation (L) lors de l'ouverture de l'orifice (19), et
dans laquelle les capteurs magnétiques (35a, 35b) sont à une position plus en direction du premier côté qu'une surface d'extrémité du second côté du rotor à aimant (41, 81) lorsque l'orifice (19) est fermé, et à une position plus en direction du second côté qu'une surface d'extrémité du premier côté du rotor à aimant (41, 81) lorsque l'orifice (19) est entièrement ouvert.

5. Soupape à commande électrique (1, 2) selon l'une quelconque des revendications 1 à 3,
dans laquelle le rotor à aimant (41, 81) se déplace jusqu'à un premier côté dans la direction de l'axe de rotation (L) lors de la fermeture de l'orifice (19) et jusqu'à un second côté dans la direction de l'axe de rotation (L) lors de l'ouverture de l'orifice (19),
dans laquelle les capteurs magnétiques (35a, 35b) sont à une position plus en direction du second côté que les multiples dents polaires (63, 64) du stator (60), et
dans laquelle les capteurs magnétiques (35a, 35b) sont agencés de manière à faire au rotor à aimant (41, 81) dans la direction radiale avec l'enveloppe (30) positionnée entre ceux-ci lorsque l'orifice (19) est fermé.

6. Soupape à commande électrique (1, 2) selon l'une quelconque des revendications 1 à 5, dans laquelle une position des capteurs magnétiques (35a, 35b) dans la direction de l'axe de rotation (L) est dans les limites d'une plage correspondant à une longueur complète du rotor à aimant (41, 81) dans un état quelconque allant de l'orifice (19) fermé jusqu'à l'orifice (19) entièrement ouvert.

7. Soupape à commande électrique (1, 2) selon la revendication 6, dans laquelle une position du stator (60) dans la direction de l'axe de rotation (L) est dans les limites de la plage correspondant à la longueur complète du rotor à aimant (41, 81) dans un état quelconque allant de l'orifice (19) fermé jusqu'à l'orifice (19) entièrement ouvert.

8. Soupape à commande électrique (1, 2) selon l'une quelconque des revendications 1 à 7, comportant en outre :
un boîtier (70) qui reçoit l'enveloppe (30) et le stator (60),
dans laquelle le boîtier (70) reçoit en outre une carte à circuit (75), et
dans laquelle les capteurs magnétiques (35a, 35b) sont connectés à la carte à circuit par des fils (77).
